# EUROPEAN PATENT APPLICATION

(11) **EP 2 997 826 A2**
(43) Date of publication of application: **23.03.2016**
(21) Application number: 15185004.7
(22) Date of filing: 14.09.2015
(51) Int. Cl.: A21C 1/02, A21C 1/14, B01F 15/06, B01F 7/00, B01F 7/16, B01F 7/32

(54) **PERFECTED KNEADING MACHINE AND FUNCTIONING METHOD THEREOF**

(30) Priority: 17.09.2014 IT MI20141597
(71) Applicant: G.S.G. S.r.l., 36075 Montecchio Maggiore - Vicenza (IT)
(72) Inventor: BRAVO, GENESIO, 36050 SOVIZZO - VICENZA (IT); BRAVO, STEFANO, 36050 SOVIZZO - VICENZA (IT)
(74) Representative: Martegani, Franco

(57) **Abstract**

The present invention relates to a kneading machine (1) of the type comprising a tank (2) and a stirrer (4) rotating in the tank (2) around an axis substantially coinciding with a transmission shaft (3) which extends into the tank (2) to convey a driving motion to the stirrer (4), also comprising fixed blades (5) housed in the tank (2) protruding radially with respect to the rotation axis of the stirrer (4); a further object of the invention relates to a functioning method of said machine (1).

## Description

The present invention relates to the field of kneading machines, such as those for pastry-making and the like.

Kneading machines are known in the state of the art, which comprise, in general, a tank in which the ingredients are placed and at least one stirrer, destined for kneading the ingredients thanks to its rotation movement around its own axis alone.

These machines are conceptually distinct from so-called "planetary" machines which are much more complex and relatively more expensive, wherein the stirrer, in addition to rotating on its own axis, rotates around another different rotation axis.

Again with respect to kneading machines in which the stirrer rotates around its own axis alone, various types of stirrers are known, specifically conformed for the use for which they are destined.

It should be noted that the form of the stirrer is particularly important for the final result, as food preparations of this type are normally delicate and must therefore be subjected to accurate processing.

A particular type of dough is that called "Pãtè à Choux", which is a particular type of dough destined for bignés and éclairs.

This dough is extremely delicate due to the particular blend to be produced between its ingredients (water, butter, sugar, flour, whole eggs); the blend must in fact be completely free of lumps.

In this type of dough, however, lumps tend to form with relative ease as the percentage of eggs is high and upon mixing with flour, lumps tend to be generated.

A relatively similar case is that of pastry cream, which, likewise, even if for different reasons, tends to form undesired lumps.

The Applicant has noticed that, in the state of the art, the kneading machines and stirrers assembled on the same do not give completely satisfactory results.

Furthermore, these two types of food (Pate à Choux and pastry cream), even if linked by possible common uses - within the context of pastry products -, often cannot be produced with the same machine and/or stirrer, as the difference between the two products does not recommend this approach, compelling an operator to use two different machines or at least two specific stirrers, or to use a planetary machine, which is more cumbersome and expensive.

The objective of the present invention is to overcome the drawbacks of the known art.

In particular, an objective of the present invention is to provide a kneading machine capable of guaranteeing excellent efficiency in eliminating lumps.

Another objective of the invention is to provide a kneading machine which can be advantageously used for producing both Pate à Choux and pastry cream.

These and further objectives of the present invention are achieved by means of a machine according to the first enclosed claim and a functioning method of the machine according to the relative enclosed independent claim.

A first object of the invention therefore relates to a kneading machine according to the first enclosed claim, whereas another independent object of the invention relates to a functioning method of said machine according to the invention.

The general idea at the basis of the present invention envisages providing a kneading machine of the type comprising a tank and a stirrer which rotates in the tank around an axis substantially coinciding with a transmission shaft of the motion which extends into the tank to convey a driving motion to the stirrer; the machine advantageously comprises fixed blades housed in the tank protruding radially with respect to the shaft.

This solution offers a double advantage: during the feeding phase of the ingredients, it provides an obstacle to the rotation of the same, amalgamating them with each other and contributing to the breakage of the most voluminous elements and any possible lumps that may be formed during this phase.

In the actual kneading phase, it not only contributes to breaking up the lumps but also helps the movement of the actual dough.

A further object of the invention relates to a kneading method for a kneading machine of the type described above.

The method envisages regulation of the rotation rate of the stirrer as follows;
- a first heating phase in which liquid ingredients are inserted, effected at high velocity: during the heating phase of the liquid ingredients, the high velocity reduces the waiting time;
- a second phase, for introducing butter, in which the velocity depends on the program selected by the user on the basis of the type of butter used and can therefore be the same or different from the velocity of the first heating phase; in this second phase, rotation pauses (rotation rate equal to zero) can be optionally present, based on the type of butter used;
- a third phase, for introducing flour, in which the stirrer functions at a high and low velocity, so as to exploit the inertia of the rotating mass to break the lumps and start the formation of the dough; the alternating functioning phase, at high and low velocity, is envisaged during the introduction and mixing of the flour until the dough reaches a pre-fixed temperature threshold;
- a fourth operating phase, subsequent to the third phase, in which the velocity remains fixed during the subsequent phase.

Further advantageous characteristics, considered individually or combined with each other, are object of the enclosed claims, which should be considered as being an integral part of the present description.

The invention is described hereunder with reference to non-limiting examples, provided for illustrative and non-limiting purposes in the enclosed drawings.

These drawings illustrate different aspects and embodiments of the invention and, when appropriate, reference numbers illustrating structures, components, similar materials and/or elements in different figures are indicated by similar reference numbers.

In the enclosed figures:
Figure 1 illustrates a transversal section of the machine according to the invention, without the base;
Figure 2 illustrates a view from above of the machine of the invention;
Figure 3 illustrates an enlarged detail of figure 1;
Figure 4 illustrates an exploded view of parts of the machine of the previous figures;
Figures 5, 6 and 7 illustrate enlarged details of parts of the machine of the previous figures;
Figure 8 illustrates a perspective view of a detail of the machine of the previous figures.

Whereas the invention can undergo various modifications and alternative constructions, some preferred embodiments are shown in the drawings and are described in detail hereunder.

It should be understood, however, that there is no intention of limiting the invention to the specific embodiment illustrated but, on the contrary, it intends to cover all modifications, alternative constructions and equivalent elements that fall within the scope of the invention, as defined in the claims.

The use of "for example", "etc.", "or" indicates non-exclusive alternatives, with no limitation unless otherwise specified.

The use of "comprises" means "comprises, but not limited to" unless otherwise specified.

Indications such as "vertical" and "horizontal", "upper" or "lower" (without other indications) should be considered as referring to the assembly (or operative) conditions and referring to the normal terminology used in everyday language, wherein "vertical" indicates a substantially parallel direction to that of the force of gravity vector "g" and "horizontal" a direction perpendicular to the above.

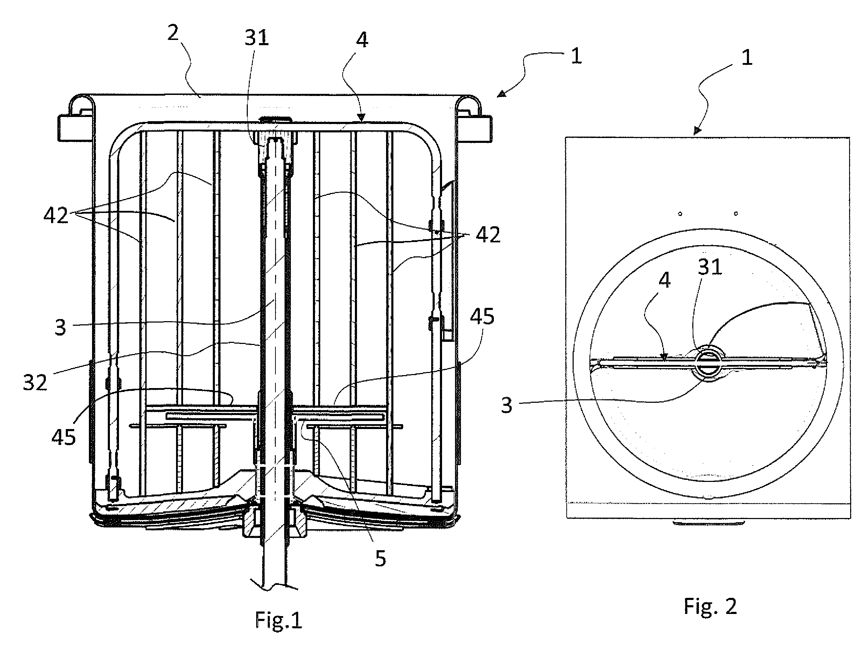

With reference to the enclosed figures 1-8, these show a simplified view of a non-limiting example of a kneading machine according to the invention, indicated as a whole by the reference number 1.

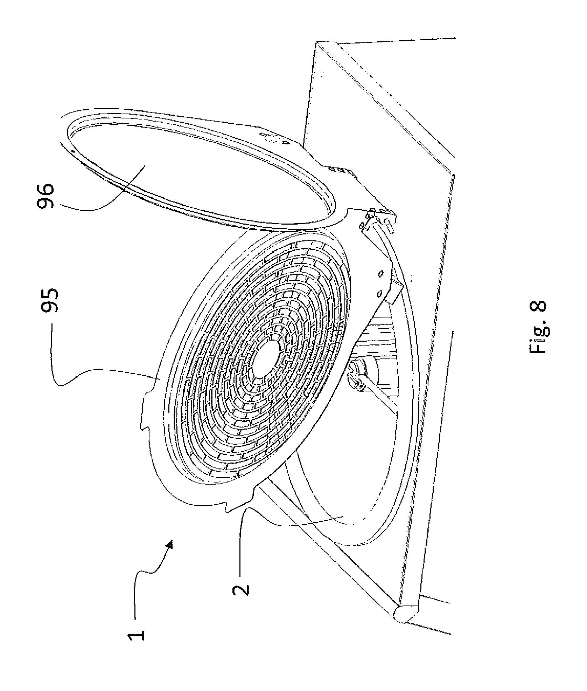

It should be noted that in figures 1-7, for simplicity of reading, the machine 1 is shown without the base which typically houses, at least the motor unit, the electronic card and the control interfaces of the machine; these parts are already known per sé and in any case not necessary for understanding the invention; figure 8, on the other hand, shows the upper part of the casing which houses the components and a detail of a double lid which closes the tank.

The machine 1 comprises a tank 2 inside which there is a stirrer 4; the tank 2 is open above in correspondence with an opening mouth and has, on the opposite end, a tank bottom; the tank 2 is typically substantially cylindrical.

The opening mouth can be closed when in use, by means of a pair of lids 95,96 (see fig. 8) which allow the ingredients to be introduced without stopping the machine; more specifically, it can be noted that there is an outer lid 96 and an inner lid 95 which can be independently moved between a closing position of the mouth of the tank 2 and an opening position of the same.

The lids 95 and 96 are substantially hinged on the same axis and therefore rotate until they are superimposed at least in correspondence with the closing position of the tank 2.

The inner lid 95 is gridded to allow the insertion of the products into the tank without having to stop the machine (for the safety of the operator), whereas the outer lid 96 is continuous, so as to close the tank and prevent the products from accidentally spilling during functioning or to preserve the heat (possibly necessary for the processing).

The stirrer 4 rotates in the tank 2 around an axis coinciding with the transmission shaft 3, which extends into the tank 2.

The transmission shaft 3 is kept in position by a base column 32 which is seal-engaged on the bottom of the tank 2; said base column 32 is shaped like a cylindrical sleeve and houses the shaft 3, freely rotatable, in its interior; in the embodiment shown, the base column 32 also extends into the tank 2, even if for a shorter length with respect to that of the transmission shaft.

A first free end 31 of the shaft 3, i.e. the upper end (far from the bottom of the tank 2) comprises engagement means with the stirrer 4, for example a shaped head provided with a housing seat 35 for a perimetric frame 41 of the stirrer 4.

The opposite end 33 of the shaft 3, on the other hand, is provided with coupling means with a motor unit, for example a key connection, a toothed wheel or the like.

The activation, on the part of the motor unit, of the key connection (or the like) thus causes the rotation of the shaft 3 (inside the base column 32, which is fixed), comprising its terminal free end 31, which acts on the stirrer 4 causing it to rotate.

As far as the stirrer 4 is concerned, this comprises a perimetric frame 41 and prongs 42 which extend parallelly with respect to each other in a first direction, in particular in a direction parallel to the rotation axis of the stirrer and consequently of the shaft 3.

According to the invention, the machine 1 also comprises fixed blades 5 which are housed in the tank 2 and protrude in a radial direction with respect to the rotation axis of the stirrer 4, i.e. in the example, with respect to the shaft 3 or, equivalently, with respect to the column 32.

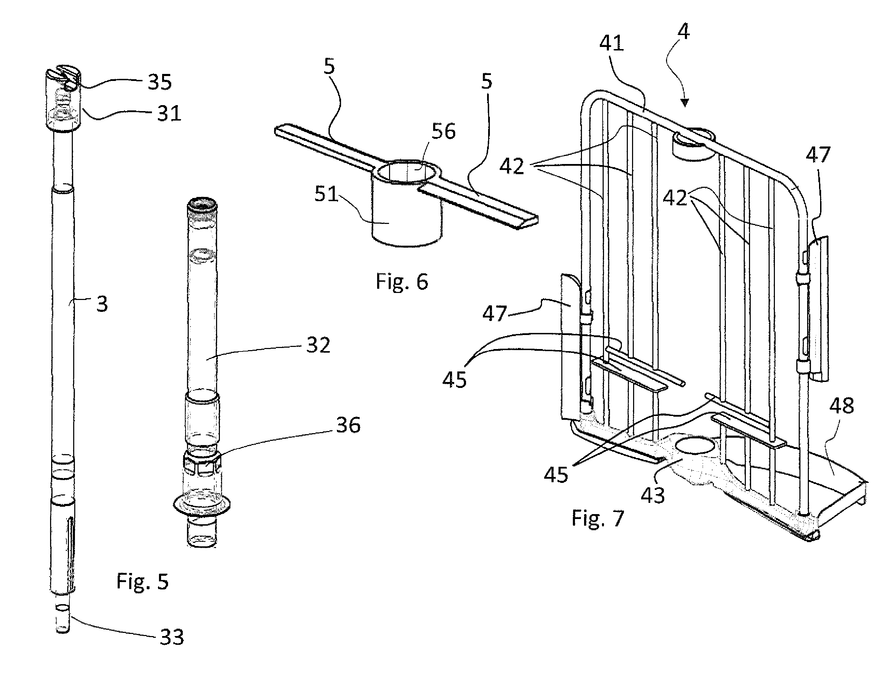

With reference also to figure 6, it can be noted that the fixed blades 5 are assembled on a sleeve 51, from which they protrude radially; the sleeve 51 is engaged on the column 32 by means of rotating engagement means, so that the blades 5 remain in a fixed position with respect to the column 32, which (it should be remembered) does not rotate with respect to the shaft 3 or stirrer 4.

The rotating engagement means are, in the example provided herein and with reference to figures 5 and 6, complementary hexagonal profiles, one, 56, formed inside the sleeve 51, and the other, 36, outside the base column 32; equivalently, instead of the complementary hexagonal profiles, equivalent non-cylindrical profiles can be envisaged, such as polygonal, oval or the like, capable of rotatingly blocking the sleeve 51 on the flange 32; even if rotatingly coupled, the sleeve and flange are advantageously reciprocally free to be removed in an axial direction, thus facilitating possible cleaning operations.

With respect to the fixed blades 5, these preferably have a transversal section in the form of a rectangular trapezium, so as to have a sharp edge which is particularly useful for breaking the lumps of the dough.

Furthermore, the profile forms a tilted surface which, when subjected to the flow of the product being processed, tends to push the group of fixed blades 5 downwards, i.e. keeping it firmly engaged with the column.

The overall length of the fixed blades 5 is such that they preferably do not protrude with respect to the perimetric frame 41 of the stirrer 4, thus being included in the overall dimension of the latter.

It can be noted, in particular, that the fixed blades 5 are located (with respect to the height of the column 32 in the tank) in a position closer to the bottom of the tank 2.

As the blades 5 are fixed, they are therefore in correspondence with a certain height of the shaft 3, in correspondence with which the prongs 42 also extend, the latter are interrupted in correspondence with the area in which the fixed blades 5 are located, so as to allow the relative movement of the stirrer 4 without interfering with the fixed blades 5.

It should be noted, moreover, that in this way, it is easy to operate even if the machine is not completely full.

In particular, and also with reference to figure 7, connection arms 45 are envisaged in correspondence with the interrupted prongs 42, which extend above and below the fixed blades 5 in an assembled condition.

The connection arms 45 connect the interrupted prongs for strengthening the stirrer 4 and the space between the two facing connection arms is approximately equal to or slightly greater than the encumbrance (in the same direction) of the fixed blades 5.

In this way, the latter advantageously pass between the connection arms 45 in a position close to the same, optimally breaking any possible lumps in the dough.

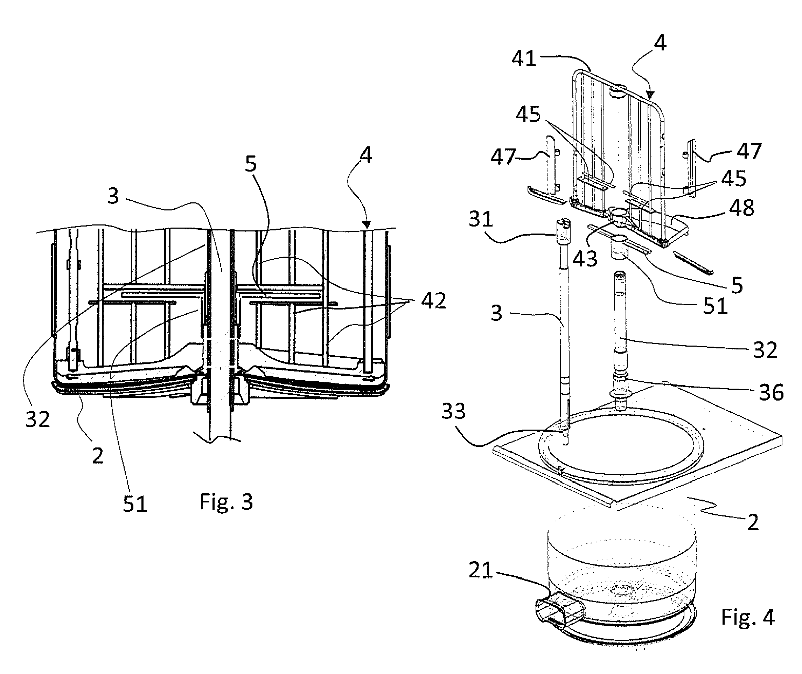

According to a particularly advantageous characteristic, the upper arms (those closest to the end 31) have a rounded section and are closer to the blades 5 with respect to the lower arms (those furthest away from the end 31) which have a substantially rectangular section and are further away from the blades 5 (this detail can be clearly seen in figures 1 and 3).

According to a further advantageous and optional characteristic, the stirrer 4 comprises two scraping spatulas 47 asymmetrically connected to the perimetric frame 41 in correspondence with its sides facing the wall of the cylindrical casing of the tank 2; said spatulas 47 ensure that the dough does not adhere to said walls, but, on the other hand, is brought back into the mass of dough being processed.

Another optional and advantageous characteristic relates to the presence of a "sail-shaped" spatula 48 which extends radially from the perimetric frame 41 in correspondence with its lower bushing 43 engaged on the shaft 3.

The "sail-shaped" spatula 48 is curved and connected to the frame 41, also in correspondence with its end edge, thanks to a connecting portion (preferably straight).

The main purpose of the sail-shaped spatula 48 is to facilitate the removal of the dough from the discharge mouth 21, which is connected with the inside of the tank 2.

The sail-shaped spatula 48 is positioned close to the bottom of the tank 2, so as to act on the dough deposited in the same.

The machine 1 described above also comprises heating devices, for example heating electric resistances positioned around the tank 2 or similar device, in order to bake the dough.

Analogously, cooling devices can also be present, for example coils, destined for carrying cooling liquid.

As far as the functioning method of the machine is concerned, the Applicant has observed that by varying the rotation rate of the stirrer with a certain profile, under certain moments of functioning, the best advantages of the machine 1 described above are obtained.

More specifically, the rotation rate of the stirrer is regulated as follows:
- a first heating phase in which liquid ingredients are inserted, effected at high velocity: during the heating phase of the liquid ingredients, the high velocity reduces the waiting time;
- a second phase, for introducing butter, in which the velocity depends on the program selected by the user based on the type of butter used and can therefore be the same or different from the velocity of the first heating phase; in this second phase, rotation pauses (rotation rate equal to zero) can be optionally present, based on the butter used;
- a third phase, for introducing flour, in which the stirrer functions at a high and low velocity, so as to exploit the inertia of the rotating mass to break the lumps and start the formation of the dough; the alternating functioning phase, at high and low velocity, is envisaged during the introduction and mixing of the flour until the dough reaches a pre-fixed temperature threshold;
- a fourth operating phase, subsequent to the third phase, in which the velocity remains fixed during the subsequent phase.

The term "high" and "low" velocity refer to two angular rotation rates of the stirrer, the first greater than the second.

The objectives listed above have therefore been achieved.

Numerous variants with respect to what has been described so far are obviously possible.

## Claims

1. A kneading machine (1) of the type comprising a tank (2) and
a stirrer (4) rotating in the tank (2) around an axis substantially coinciding with
a transmission shaft (3) which extends into the tank (2) to convey a driving motion to the stirrer (4) **characterized in that**
it comprises fixed blades (5) housed in the tank (2) radially protruding with respect to the rotation axis of the stirrer (4).

2. The machine (1) according to claim 1, wherein the stirrer (4) comprises a perimetric frame (41) and a plurality of prongs (42) which extend parallelly with respect to each other in a first direction parallel to the rotation axis of the stirrer (4).

3. The machine (1) according to claim 2, wherein the fixed blades (5) extend in a second direction perpendicular with respect to the first direction.

4. The machine (1) according to one or more of the previous claims, wherein the fixed blades (5) are positioned in correspondence with a height of the shaft (3) into which said prongs (42) also extend, the prongs (42) being interrupted in correspondence with the fixed blades (5) to allow the relative movement of the stirrer (4) with respect to the fixed blades (5) without interference between the two.

5. The machine (1) according to the previous claim, wherein connection arms (45) are envisaged in correspondence with the interrupted prongs (42), destined for connecting adjacent interrupted prongs (42).

6. The machine (1) according to one or more of the previous claims, comprising a base column (32) destined for receiving the transmission column (3) in order to hold it in position and free to rotate, the base column (32) being seal-inserted on the bottom of the tank (2) and shaped like a cylindrical sleeve, the fixed blades (5) also being assembled on a sleeve (51), from which they protrude radially, said sleeve (51) being engaged on the base column (32) through rotation engagement means, so that the blades (5) remain in a fixed position with respect to the base column (32), which does not rotate with respect to the shaft (3) and/or the stirrer (4).

7. The machine (1) according to one or more of the previous claims, wherein the stirrer comprises a "sail-shaped" spatula (48) which extends radially from the perimetric frame (41) in correspondence with a lower bushing (43) of the frame (41) engaged on the column (3), said "sail-shaped" spatula (48) being curved to facilitate the removal of the dough from the tank (2).

8. The machine (1) according to one or more of the previous claims, comprising at least one of the following: a heating device and a cooling device, for heating and/or cooling the tank, respectively.

9. The machine (1) according to one or more of the previous claims, comprising an outer (96) and an inner (95) lid, independently movable between a closing position of a mouth of the tank (2) and an opening position of the same, the inner lid (95) being gridded and the outer lid (96) continuous.

10. A functioning method of a kneading machine (1) according to one or more of the previous claims, wherein the rotation rates of the stirrer change as follows:
- a first heating phase in which liquid ingredients are inserted, effected at high velocity: during the heating phase of the liquid ingredients, the high velocity reduces the waiting time;
- a second phase, for introducing butter, in which the velocity depends on the program selected by the user on the basis of the type of butter used and can therefore be the same or different from the velocity of the first heating phase; in this second phase, rotation pauses (rotation rate equal to zero) can be optionally present, based on the butter used;
- a third phase, for introducing flour, in which the stirrer functions at a high and low velocity, so as to exploit the inertia of the rotating mass to break the lumps and start the formation of the dough; the alternating functioning phase, at high and low velocity, is envisaged during the introduction and mixing of the flour until the dough reaches a pre-fixed temperature threshold;
- a fourth operating phase, subsequent to the third phase, in which the velocity remains fixed during the subsequent phase.
